# EUROPEAN PATENT SPECIFICATION

(11) **EP 3 527 113 B1**
(45) Date of publication and mention of the grant of the patent: **10.05.2023**
(21) Application number: 17859822.3
(22) Date of filing: 11.10.2017
(51) Int. Cl.: A47J 27/00, A47J 36/32, A47J 27/08

(54) **COOKING APPLIANCE**
KOCHGERÄT
APPAREIL DE CUISSON

(30) Priority: 12.10.2016 CN 201610892529; 12.10.2016 CN 201621116523 U
(43) Date of publication of application: 21.08.2019
(73) Proprietor: Foshan Shunde Midea Electrical Heating Appliances Manufacturing Co., Ltd., Foshan Guangdong 528311 (CN)
(72) Inventor: YANG, Xingguo, Foshan Guangdong 528311 (CN)
(74) Representative: Dunlop, Hugh Christopher
(86) International application number: PCT/CN2017/105719
(87) International publication number: WO 2018/068731

(56) References cited:
- CN-A- 103 735 148
- CN-A- 103 735 148
- CN-A- 105 747 829
- CN-U- 203 762 847
- CN-U- 204 520 255
- CN-U- 206 239 117
- JP-A- 2006 288 742
- US-A1- 2016 007 644

## Description

### FIELD

The present disclosure relates to a technical field of cooking appliances, and more particularly, to a cooking appliance.

### BACKGROUND

With the popularization of cooking appliances such as electric pressure cookers and rice cookers, they have been further expanded in functionality, and some functions performed in a state in which a cover is open have been incorporated, such as frying, decoction, stir-frying, stewing, and the like.

However, the existing products are not designed to effectively separate control panels configured to control two types of functions, i.e., cooking functions in a cover-closed state and cooking functions in a cover-open state, and a situation where the cooking function supposed to be performed in the cover-open state is operated in the cover-closed state may occur, which leads to cooking failure and even product damage in serious cases.

CN103735148A describes a cooking appliance comprising a pot body provided with a control panel having a plurality of function buttons and a pot lid comprising connecting buttons that correspond to the plurality of function buttons.

### SUMMARY

The invention is set out in the appended claims. Through the above technical solutions, the present disclosure divides the existing control panel into the first control panel working in the cover-open state and the second control panel working in the cover-closed state, and the first control panel is covered by the pot cover assembly in the cover-closed state, such that it cannot be manipulated. Therefore, the user can only control the second control panel in the cover-closed state, and can only start and control a cover-open cooking function in the cover-open state, thus avoiding cooking failure or product damage caused by the user's misoperation of controlling the cover-open cooking function in the cover-closed state, and improving the operation convenience and reliability of the cooking appliance.

Additional features and advantages of the present disclosure will be given in part in the following descriptions.

### BRIEF DESCRIPTION OF THE DRAWINGS

The accompanying drawings, which are incorporated in and constitute a part of this specification, together with the description, serve to explain the present disclosure, but are not intended to limit the present disclosure, in which:
Fig. 1 is a stereogram of a cooking appliance in a cover-closed state according to a first embodiment of the present disclosure;
Fig. 2 is a stereogram of a cooking appliance in a cover-open state according to the first embodiment of the present disclosure;
Fig. 3 is a stereogram of a cooking appliance in a cover-closed state according to a second embodiment of the present disclosure;
Fig. 4 is a stereogram of a cooking appliance in a cover-open state according to the second embodiment of the present disclosure;
Fig. 5 is a stereogram of a cooking appliance in a cover-open state according to a third embodiment of the present disclosure;
Fig. 6 is a stereogram of a cooking appliance in a cover-open state according to the third embodiment of the present disclosure;
Fig. 7 is a stereogram of a cooking appliance in a cover-closed state according to a fourth embodiment of the present disclosure;
Fig. 8 is a stereogram of a cooking appliance in a cover-open state according to the fourth embodiment of the present disclosure;
Fig. 9 is a stereogram of a cooking appliance in a cover-closed state according to a fifth embodiment of the present disclosure; and
Fig. 10 is a stereogram of a cooking appliance in a cover-closed state according to the fifth embodiment of the present disclosure.

Reference numerals: pot cover assembly 1, pot body assembly 2, first control panel 3, second control panel 4, functional control key 5, display screen 6, control knob 7, cover opening button 8, first area 21, and second area 22.

### DETAILED DESCRIPTION

The specific embodiments of the present disclosure will be described in detail below with reference to the accompanying drawings. It should be understood that, the specific embodiments described herein are only used to explain the present disclosure rather than limit the present disclosure.

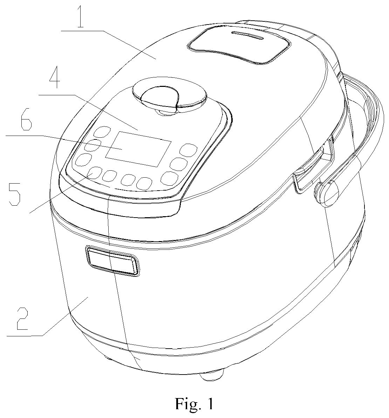

In the present disclosure, in the absence of explanation to the contrary, orientation terms such as "up," "down," "top," and "bottom" used herein refer to an electric rice cooker shown in Fig. 1 under a normal use condition, or describe the mutual positional relationship of components in the upright, vertical or gravity direction; orientation terms such as "inner" and "outer" generally refer to the interior and exterior of a chamber relative to the chamber.

The present disclosure provides a cooking appliance. The cooking appliance includes a pot body assembly 2 and a pot cover assembly 1, in which the pot cover assembly 1 can cover the pot body assembly 2 in an openable and closable manner. The cooking appliance includes a cover-closed state and a cover-open state. The cooking appliance further includes a first control panel 3 working in the cover-open state and a second control panel 4 working in the cover-closed state. The pot cover assembly 1 covers the first control panel 3 in the cover-closed state.

The present disclosure improves the existing control panel and divides it into the first control panel 3 working in the cover-open state and the second control panel 4 working in the cover-closed state; and the first control panel 3 is covered by the pot cover assembly 1 in the cover-closed state, such that the first control panel 3 cannot be manipulated. Therefore, the user can only manipulate the second control panel 4 in the cover-closed state, and can activate the first control panel 3 only in the cover-open state to control a cover-open cooking function, thus avoiding cooking failure or product damage caused by the user's misoperation of controlling the cover-open cooking function in the cover-closed state, and improving the operation convenience and reliability of the cooking appliance.

In particular, the first control panel 3 is disposed on a top surface of the pot body assembly 2. By arranging the first control panel 3 on the top surface of the pot body assembly 2, it is convenient for the pot cover assembly 1 to cover the first control panel 3 to effect the separation of the first control panel 3 and the second control panel 4.

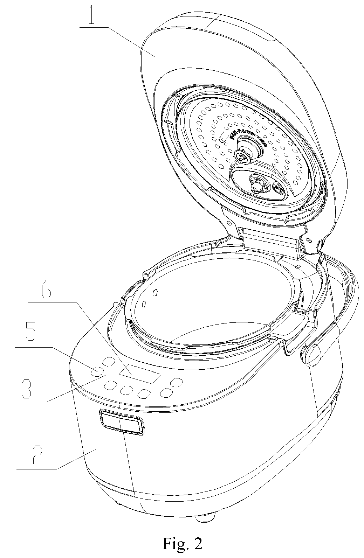

In a first embodiment of the present disclosure, referring to Figs. 1 and 2, the second control panel 4 is disposed on a top surface of the pot cover assembly 1, and the first control panel 3 is disposed on the top surface of the pot body assembly 2. The top surface of the pot body assembly 2 is provided with a table top, and the table top is provided with a first area 21 configured to mount the first control panel 3. The pot cover assembly 1 is provided with a shielding part configured to shield the first area 21 in the cover-closed state, such that the pot cover assembly 1 can cover the first control panel 3. As shown in Fig. 1, in the cover-closed state, the pot cover assembly 1 covers the first control panel 3 on the top surface of the pot body assembly 2, and only the second control panel 4 on the top surface of the pot cover assembly 1 is exposed to the outside, such that the first control panel 3 and the second control panel 4 are separated, and the user can conveniently control the cooking appliance to cook in the cover-closed state through the second control panel 4. As shown in Fig. 2, in the cover-open state, the second control panel 4 is flipped up to a rear side together with the pot cover assembly 1, and only the first control panel 3 on the top surface of the pot body assembly 2 is exposed to the outside, such that the user controls the cooking appliance to cook in the cover-open state through the first control panel 3. Therefore, the present disclosure overcomes a defect that a top-mounted control panel of an existing high-end conjoined product is flipped up to the rear side with the pot cover assembly 1 in the cover-open state, making it very inconvenient for the user to cook in the cover-open state. The cooking appliance of the present disclosure can still easily perform the cover-open cooking function in the cover-open state, such that the operation convenience of the cooking appliance is further improved.

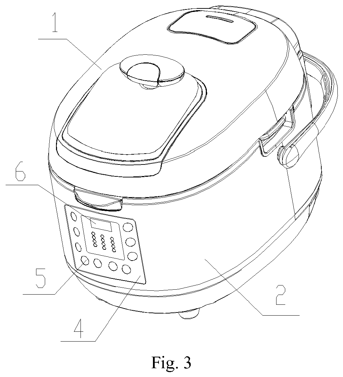

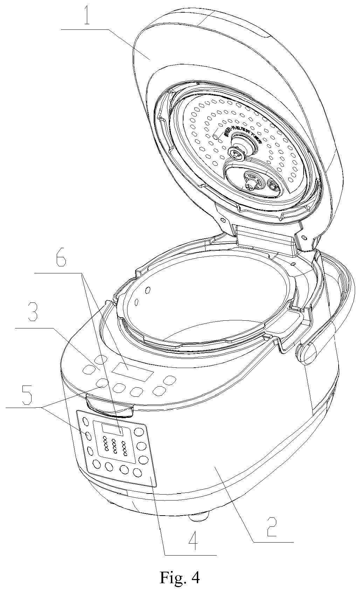

However, the present disclosure is not limited to the above one embodiment, and in particular, Figs. 3 and 4 show stereograms of a cooking appliance according to a second embodiment of the present disclosure. Therein, it is shown that the second control panel 4 is disposed to a surface of the pot cover assembly 1, and the first control panel 3 is disposed on the top surface of the pot body assembly 2. As shown in Figs. 3 and 4, the second control panel 4 of the surface of the pot cover assembly 1 is always exposed to the outside regardless of whether it is in the cover-closed state or in the cover-open state. Further referring to Fig. 3, in the cover-closed state, the pot cover assembly 1 covers the first control panel 3 on the top surface of the pot body assembly 2, so that the first control panel 3 and the second control panel 4 are separated to make it convenient for the user to control the cooking appliance to cook in the cover-closed state by the second control panel 4. Referring to Fig. 4, in the cover-open state, the first control panel 3 of the top surface of the pot body assembly 2 is exposed to the outside, and the user controls the cooking appliance to cook in the cover-open state by the first control panel 3. In this embodiment, the first control panel 3 and the second control panel 4 are disposed on different surfaces of the pot cover assembly 1 to separate the first control panel 3 and the second control panel 4, so as to avoid misoperation by the user. Further, in the cover-open state, the first control panel 3 directly faces the user, such that the user will not manipulate the second control panel 4 on the surface of the pot body assembly 2, thereby facilitating cooking by the user in the cover-open state and further avoiding cooking failure and product damage caused by misoperation of the user.

The present disclosure also provides another embodiment. In particular, the top surface of the pot body assembly 2 is provided with a table top, and the table top is provided with a first area 21 configured to mount the first control panel 3; the pot cover assembly 1 is provided with a shielding part configured to shield the first area 21 in the cover-closed state. The table top on the top surface of the pot body assembly 2 is also provided with a second area 22 configured to mount the second control panel 4; and the pot cover assembly 1 is provided with a relief space to avoid the second area 22 in the cover-closed state. It should be noted that there are many forms of relief space. For example, the relief space of the pot cover assembly 1 can be a hole provided in a pot cover when the pot cover assembly 1 has the same size as the top surface of the pot body assembly 2. In the cover-closed state, the pot cover assembly 1 can cover the first control panel 3, and the hole exposes the second control panel 4 disposed on the top surface of the pot body assembly 2, such that the user can only operate the second control panel 4.

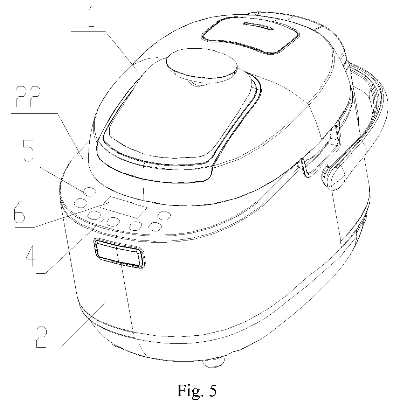

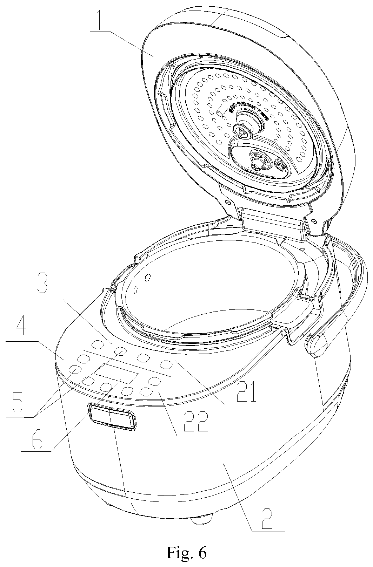

As shown in Figs. 5 and 6, the relief space can be formed by designing the pot cover assembly 1 to a shorter size; a front end of the pot cover assembly 1 defines the relief space to avoid the second area 22 provided at a front end of the top surface of the pot body assembly 2 when the cover is closed, so as to expose the second control panel 4.

Referring specifically to Figs. 5 and 6, the top surface of the pot body assembly 2 includes a pot-cover-assembly coverage area (i.e., the first area 21) provided with the first control panel 3 and a pot-cover-assembly non-coverage area (i.e., the second area 22) provided with the second control panel 4. In the cover-closed state, the pot cover assembly 1 covers the pot-cover-assembly coverage area. In this embodiment, although the first control panel 3 and the second control panel 4 are both disposed on the top surface of the pot body assembly 2, the top surface of the pot body assembly 2 is divided into the pot-cover-assembly coverage area and the pot-cover-assembly non-coverage area by a covering effect of the pot cover assembly 1, and the first control panel 3 is arranged in the pot-cover-assembly coverage area, such that only the second control panel 4 is exposed outside while the first control panel 3 is covered by the pot cover assembly 1 in the cover-closed state, thereby enabling the user to manipulate the second control panel 4 to realize a cover-closed cooking function of the cooking appliance. In the cover-open state, the pot cover assembly 1 is flipped up to expose the first control panel 3, such that the user can distinguish the first control panel 3 from the second control panel 4, and can perform cooking in the cover-open state conveniently.

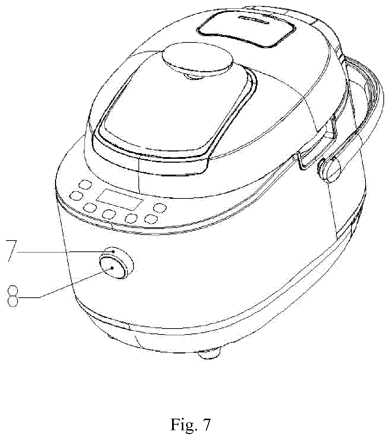

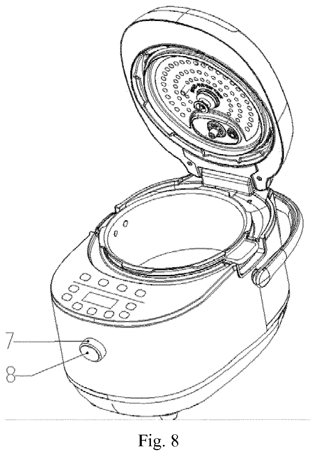

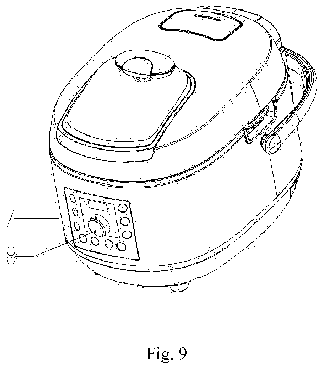

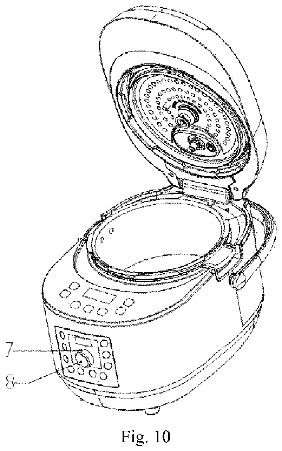

Referring specifically to Figs. 7-10, the second control panel 4 is provided with a control knob 7 configured to adjust a working state of the cooking appliance.

Further, the center of the control knob 7 is provided with a cover opening button 8 configured to open the pot cover assembly 1. In this way, cooking parameters such as temperature, pressure, time, etc. can be adjusted by turning the knob 7, and an upper cover can be opened by pressing the cover opening button 8.

In order to further avoid cooking failure or product damage caused by the user's misoperation, in particular, the cooking appliance further includes a controller, a first control circuit and a second control circuit. The first control panel 3 is connected to the controller by the first control circuit, and the second control panel 4 is connected to the controller by the second control circuit. When the cooking appliance is in the cover-closed state, the controller controls to connect the second control circuit and disconnect the first control circuit; when the cooking appliance is in the cover-open state, the controller controls to connect the first control circuit and disconnect the second control circuit. Through the control of the controller, in the cover-closed state, only the second control panel 4 works and the first control panel 3 does not work; in the cover-open state, only the first control panel 2 works and the second control panel 4 does not work. That is, in the cover-open state, the user can only manipulate the first control panel 3 to start the cooking appliance and perform the corresponding cooking function, and even if the user mistakenly operates the second control panel 4, the cooking function of the cooking appliance will not be affected; on the contrary, in the cover-closed state, the user can only manipulate the second control panel 4 to start the cooking appliance and perform the corresponding cooking function, and the user has no access to the first control panel 3 in the cover-closed state, thus avoiding the possibility of misoperation by the user.

In order to realize the function of the above controller, in particular, the cooking appliance further includes a detection component configured to detect the working state of the cooking appliance in the cover-closed state or the cover-open state, and transmit the detected working state to the controller. For example, the detection component may be a sensor through which it can be known that the pot cover assembly 1 of the cooking appliance is in the cover-open state or the cover-closed state. The sensor may be disposed on the top surface of the pot body assembly 2 or preferably on the first control panel 3, or provided to a contact surface of the pot cover assembly 1 with the pot body assembly 2.

In particular, in a non-limiting manner, in a preferred embodiment of the present disclosure, the detection component includes a pressure sensor provided on the first control panel 3 and a triggering member provided correspondingly to the pot cover assembly 1. In the cover-closed state, the pressure sensor is pressed against the triggering member and generates a pressure signal to be transmitted to the controller. In the cover-closed state, the pressure sensor on the first control panel 3 is triggered by the triggering member of the pot cover assembly 1 to transmit the pressure signal generated by the pressure sensor to the controller, and then the controller controls to connect the second control circuit and disconnect the first control circuit, such that the second control panel 4 works and the first control panel 3 is disconnected. On the contrary, in the cover-open state, the contact pressure on the pressure sensor is released, and the pressure sensor transmits a release signal to the controller, and then the controller controls to connect the first control circuit and disconnect the second control circuit, such that the first control panel 3 works and the second control panel 4 is disconnected. However, the present disclosure is not limited thereto, and the pressure sensor may be provided to a bottom surface of the pot cover assembly 1.

In one embodiment of the present disclosure, the triggering member is a protrusion portion that extends from the bottom surface of the pot cover assembly 1 toward the pressure sensor. The pressure sensor is correspondingly formed in a recess configured to accommodate the protrusion portion. However, the present disclosure is not limited thereto, and the triggering member may be in other forms, such as a telescopic member.

In particular, the first control panel 3 and the second control panel 4 are each provided with a functional control key 5. The functional control key 5 in the second control panel 4 is used to control the cooking function of the cooking appliance in the cover-closed state. For example, the functional control key 5 in the second control panel 4 may refer to stewing, timing, or the like. The functional control key 5 in the first control panel 3 is used to control the cooking function of the cooking appliance in the cover-open state. For example, the functional control key 5 in the first control panel 3 may refer to frying, decoction, stir-frying, etc. Preferably, the first control panel 3 and the second control panel 4 may also be provided with a display screen 6. The display screen 6 is electrically connected to the functional control keys 5 on the first control panel 3 and the second control panel 4, to display the function of the operated functional control key 5 and the current state of the cooking appliance on the display screen 6. For example, the function, temperature, time or the like achieved at present by the cooking appliance are displayed. It should be noted that this is not limited to keys, and the first control panel 3 and the second control panel 4 may also be touch screens.

In one embodiment of the present disclosure, the first control panel 3 is provided to a lower surface of the pot cover assembly 1 in the cover-closed state, which can also realize the setting of the control panel.

The cooking appliance of the present disclosure may take various suitable forms such as an electric pressure cooker or an electric rice cooker. In the embodiments shown in Figs. 1 to 6, the cooking appliance is an electric pressure cooker.

In summary, the present disclosure improves the existing control panel and divides it into the first control panel 3 working in the cover-open state and the second control panel 4 working in the cover-closed state, and the first control panel 3 is covered by the pot cover assembly 1 in the cover-closed state, such that the first control panel 3 cannot be manipulated. Therefore, the user can only manipulate the second control panel 4 in the cover-closed state, and can activate the first control panel 3 only in the cover-open state to control the cover-open cooking function, thus avoiding cooking failure or product damage caused by the user's misoperation of controlling the cover-open cooking function in the cover-closed state, and improving the operation convenience and reliability of the cooking appliance.

In addition, the present disclosure overcomes the defect that the top-mounted control panel of the existing high-end conjoined product is flipped over to the rear side with the pot cover when in the cover-open state, making it very inconvenient for the user to cook in the cover-open state. The cooking appliance of the present disclosure can still easily perform the cover-open cooking function in the cover-open state, thereby further improving the operation convenience of the cooking appliance.

The preferred embodiments of the present disclosure have been described in detail above with reference to the accompanying drawings. However, the present disclosure is not limited to the specific details in the above embodiments. Within the idea of the present disclosure, various modifications can be made to the technical solutions of the present disclosure, and these modifications are all within the protection scope of the present disclosure as defined in the appended claims.

## Claims

1. A cooking appliance, comprising:
a pot body assembly (2),
a pot cover assembly (1) and
a valve body mounted on the pot cover assembly (1), the pot cover assembly (1) covering the pot body assembly (2) in an openable and closable manner,
a first control panel (3) working in a cover-open state and corresponding to a cooking function in the cover-open state, and a second control panel (4) working in a cover-closed state and corresponding to a cooking function in the cover-closed state, wherein the pot cover assembly (1) covers the first control panel (3) in the cover-closed state, wherein; the cooking appliance further comprises a detection component configured to detect that a working state of the cooking appliance is the cover-closed state or the cover-open state, and transmit the detected working state to a controller, wherein;
the controller comprises a first control circuit and a second control circuit, the first control panel (3) being connected to the controller by the first control circuit, and the second control panel (4) being connected to the controller by the second control circuit, and wherein;
the controller controls to connect the first control circuit and disconnect the second control circuit when the cooking appliance is in the cover-open state; the controller controls to connect the second control circuit and disconnect the first control circuit when the cooking appliance is in the cover-closed state.

2. The cooking appliance according to claim 1, wherein the first control panel (3) is disposed on a top surface of the pot body assembly (2).

3. The cooking appliance according to claim 2, wherein the top surface of the pot body assembly (2) is provided with a table top, the table top is provided with a first area (21) configured to install the first control panel (3), and the pot cover assembly (1) is provided with a shielding part configured to shield the first area (21) in the cover-closed state.

4. The cooking appliance according to claim 3, wherein the table top is also provided with a second area (22) configured to install the second control panel (4), and the pot cover assembly (1) is provided with a relief space to avoid the second area (22) in the cover-closed state.

5. The cooking appliance according to claim 2, wherein the second control panel (4) is disposed to a side surface of the pot body assembly (2) or a surface of the pot cover assembly (1).

6. The cooking appliance according to claim 1, wherein the second control panel (4) is provided with a control knob (7) configured to adjust a working state of the cooking appliance.

7. The cooking appliance according to claim 6, wherein the center of the control knob (7) is provided with a cover opening button (8) configured to open the pot cover assembly (1).

8. The cooking appliance according to claim 1, wherein the detection component comprises a pressure sensor disposed on the first control panel (3) and a triggering member disposed correspondingly to the pot cover assembly (1), and the pressure sensor is pressed against the triggering member and generates a pressure signal to be transmitted to the controller in the cover-closed state.

9. The cooking appliance according to claim 1, wherein both the first control panel (3) and the second control panel (4) are provided with a functional control key (5).

10. The cooking appliance according to claim 1, wherein the first control panel (3) is disposed to a lower surface of the pot cover assembly (1) in the cover-closed state.

11. The cooking appliance according to any one of claims 1 to 10, wherein the cooking appliance is an electric pressure cooker or an electric rice cooker.

## Patentansprüche

1. Kochgerät, das Folgendes beinhaltet:
eine Topfkörperanordnung (2),
eine Topfdeckelanordnung (1) und
einen an der Topfdeckelanordnung (1) montierten Ventilkörper, wobei die Topfdeckelanordnung (1) die Topfkörperanordnung (2) so bedeckt, dass sie geöffnet und geschlossen werden kann,
ein erstes Bedienfeld (3), das in einem Zustand mit offenem Deckel funktioniert und einer Kochfunktion in dem Zustand mit offenem Deckel entspricht, und ein zweites Bedienfeld (4), das in einem Zustand mit geschlossenem Deckel funktioniert und einer Kochfunktion in dem Zustand mit geschlossenem Deckel entspricht, wobei die Topfdeckelanordnung (1) in dem Zustand mit geschlossenem Deckel das erste Bedienfeld (3) bedeckt, wobei: das Kochgerät ferner ein Erfassungsteil beinhaltet, das zum Erfassen, dass ein Funktionszustand des Kochgeräts der Zustand mit geschlossenem Deckel oder der Zustand mit offenem Deckel ist, und zum Übertragen des erfassten Funktionszustands an eine Steuereinheit konfiguriert ist, wobei:
die Steuereinheit eine erste Steuerschaltung und eine zweite Steuerschaltung beinhaltet, das erste Bedienfeld (3) durch die erste Steuerschaltung mit der Steuereinheit verbunden ist und das zweite Bedienfeld (4) durch die zweite Steuerschaltung mit der Steuereinheit verbunden ist und wobei:
die Steuereinheit steuert, dass die erste Steuerschaltung eingeschaltet ist und die zweite Steuerschaltung abgeschaltet ist, wenn das Kochgerät in dem Zustand mit offenem Deckel ist; die Steuereinheit steuert, dass die zweite Steuerschaltung eingeschaltet ist und die erste Steuerschaltung abgeschaltet ist, wenn das Kochgerät in dem Zustand mit geschlossenem Deckel ist.

2. Kochgerät nach Anspruch 1, wobei das erste Bedienfeld (3) an einer Oberseite der Topfkörperanordnung (2) angeordnet ist.

3. Kochgerät nach Anspruch 2, wobei die Oberseite der Topfkörperanordnung (2) mit einer Tischplatte versehen ist, die Tischplatte mit einem ersten Bereich (21) versehen ist, der zur Installation des ersten Bedienfelds (3) konfiguriert ist, und die Topfdeckelanordnung (1) mit einem Abschirmteil versehen ist, das zum Abschirmen des ersten Bereichs (21) in dem Zustand mit geschlossenem Deckel konfiguriert ist.

4. Kochgerät nach Anspruch 3, wobei die Tischplatte auch mit einem zweiten Bereich (22) versehen ist, der zur Installation des zweiten Bedienfelds (4) konfiguriert ist, und die Topfdeckelanordnung (1) mit einem ausgesparten Raum zum Vermeiden des zweiten Bereichs (22) in dem Zustand mit geschlossenem Deckel versehen ist.

5. Kochgerät nach Anspruch 2, wobei das zweite Bedienfeld (4) an einer Seitenfläche der Topfkörperanordnung (2) oder einer Oberfläche der Topfdeckelanordnung (1) angeordnet ist.

6. Kochgerät nach Anspruch 1, wobei das zweite Bedienfeld (4) mit einem Bedienungsknopf (7) versehen ist, der zum Einstellen eines Funktionszustands des Kochgeräts konfiguriert ist.

7. Kochgerät nach Anspruch 6, wobei die Mitte des Bedienungsknopfs (7) mit einem Deckelöffnungsknopf (8) versehen ist, der zum Öffnen der Topfdeckelanordnung (1) konfiguriert ist.

8. Kochgerät nach Anspruch 1, wobei das Erfassungsteil einen Drucksensor, der auf dem ersten Bedienfeld (3) angeordnet ist, und ein Auslöseelement, das entsprechend an der Topfdeckelanordnung (1) angeordnet ist, beinhaltet, und in dem Zustand mit geschlossenem Deckel der Drucksensor gegen das Auslöseelement gedrückt wird und ein an die Steuereinheit zu übertragendes Drucksignal erzeugt.

9. Kochgerät nach Anspruch 1, wobei sowohl das erste Bedienfeld (3) als auch das zweite Bedienfeld (4) mit einer Funktionssteuertaste (5) versehen sind.

10. Kochgerät nach Anspruch 1, wobei in dem Zustand mit geschlossenem Deckel das erste Bedienfeld (3) an einer Unterseite der Topfdeckelanordnung (1) angeordnet ist.

11. Kochgerät nach einem der Ansprüche 1 bis 10, wobei das Kochgerät ein elektrischer Dampfkochtopf oder ein elektrischer Reiskocher ist.

## Revendications

1. Appareil de cuisson, comportant :
un ensemble formant corps de marmite (2),
un ensemble formant couvercle de marmite (1) et
un corps de soupape monté sur l'ensemble formant couvercle de marmite (1), l'ensemble formant couvercle de marmite (1) recouvrant l'ensemble formant corps de marmite (2) d'une manière ouvrable et fermable,
un premier panneau de commande (3) fonctionnant dans un état à couvercle ouvert et correspondant à une fonction de cuisson dans l'état à couvercle ouvert, et un deuxième panneau de commande (4) fonctionnant dans un état à couvercle fermé et correspondant à une fonction de cuisson dans l'état à couvercle fermé, dans lequel l'ensemble formant couvercle de marmite (1) recouvre le premier panneau de commande (3) dans l'état à couvercle fermé, dans lequel l'appareil de cuisson comporte par ailleurs un composant de détection configuré pour détecter qu'un état de fonctionnement de l'appareil de cuisson est l'état à couvercle fermé ou l'état à couvercle ouvert, et pour transmettre l'état de fonctionnement détecté à un dispositif de commande, dans lequel :
le dispositif de commande comporte un premier circuit de commande et un deuxième circuit de commande, le premier panneau de commande (3) étant connecté au dispositif de commande par le premier circuit de commande, et le deuxième panneau de commande (4) étant connecté au dispositif de commande par le deuxième circuit de commande, et dans lequel :
le dispositif de commande permet de commander à des fins de connexion du premier circuit de commande et de déconnexion du deuxième circuit de commande quand l'appareil de cuisson est dans l'état à couvercle ouvert ; le dispositif de commande permet de commander à des fins de connexion du deuxième circuit de commande et de déconnexion du premier circuit de commande quand l'appareil de cuisson est dans l'état à couvercle fermé.

2. Appareil de cuisson selon la revendication 1, dans lequel le premier panneau de commande (3) est disposé sur une surface supérieure de l'ensemble formant corps de marmite (2).

3. Appareil de cuisson selon la revendication 2, dans lequel la surface supérieure de l'ensemble formant corps de marmite (2) comporte un panneau plan de travail, le panneau plan de travail comporte une première zone (21) configurée pour installer le premier panneau de commande (3), et l'ensemble formant couvercle de marmite (1) comporte un élément de protection configuré pour protéger la première zone (21) dans l'état à couvercle fermé.

4. Appareil de cuisson selon la revendication 3, dans lequel le panneau plan de travail comporte également une deuxième zone (22) configurée pour installer le deuxième panneau de commande (4), et l'ensemble formant couvercle de marmite (1) comporte un espace de dégagement pour éviter la deuxième zone (22) dans l'état à couvercle fermé.

5. Appareil de cuisson selon la revendication 2, dans lequel le deuxième panneau de commande (4) est disposé sur une surface latérale de l'ensemble formant corps de marmite (2) ou sur une surface de l'ensemble formant couvercle de marmite (1).

6. Appareil de cuisson selon la revendication 1, dans lequel le deuxième panneau de commande (4) comporte un bouton de commande (7) configuré pour régler un état de fonctionnement de l'appareil de cuisson.

7. Appareil de cuisson selon la revendication 6, dans lequel le centre du bouton de commande (7) comporte un bouton d'ouverture de couvercle (8) configuré pour ouvrir l'ensemble formant couvercle de marmite (1).

8. Appareil de cuisson selon la revendication 1, dans lequel le composant de détection comporte un capteur de pression disposé sur le premier panneau de commande (3) et un élément de déclenchement disposé de manière correspondante sur l'ensemble formant couvercle de marmite (1), et le capteur de pression est comprimé contre l'élément de déclenchement et génère un signal de pression devant être transmis au dispositif de commande dans l'état à couvercle fermé.

9. Appareil de cuisson selon la revendication 1, dans lequel à la fois le premier panneau de commande (3) et le deuxième panneau de commande (4) comportent une clé de commande fonctionnelle (5).

10. Appareil de cuisson selon la revendication 1, dans lequel le premier panneau de commande (3) est disposé sur une surface inférieure de l'ensemble formant couvercle de marmite (1) dans l'état à couvercle fermé.

11. Appareil de cuisson selon l'une quelconque des revendications 1 à 10, dans lequel l'appareil de cuisson est une cocotte-minute électrique ou un cuiseur à riz électrique.
